# EUROPÄISCHE PATENTSCHRIFT

(11) **EP 2 366 072 B1**
(45) Veröffentlichungstag und Bekanntmachung des Hinweises auf die Patenterteilung: **03.04.2013**
(21) Anmeldenummer: 09753102.4
(22) Anmeldetag: 16.11.2009
(51) Int. Cl.: F16D 55/28

(54) **ELEKTROMAGNETISCH BETÄTIGBARE BREMSE**
ELECTROMAGNETICALLY ACTUATABLE BRAKE
FREIN À ACTIONNEMENT ÉLECTROMAGNÉTIQUE

(30) Priorität: 15.12.2008 DE 102008054636
(43) Veröffentlichungstag der Anmeldung: 21.09.2011
(73) Patentinhaber: ZF Friedrichshafen AG, 88038 Friedrichshafen (DE)
(72) Erfinder: THOMA, Konrad, 88048 Friedrichshafen (DE)
(86) Internationale Anmeldenummer: PCT/EP2009/065204
(87) Internationale Veröffentlichungsnummer: WO 2010/072467

(56) Entgegenhaltungen:
- EP-A- 1 011 188
- DE-C1- 3 805 705
- US-A- 4 216 849

## Beschreibung

Die vorliegende Erfindung bezieht sich auf eine elektromagnetisch betätigbare Bremse gemäß dem Oberbegriff des Patentanspruchs 1, wie z.B aus DE-C 38 05 705 bekannt.

Elektromagnetisch betätigbare Bremsen werden wegen ihres einfachen Aufbaus und des geringen benötigten Bauraums zum Abbremsen oder Festhalten von Wellen oder rotierenden Massen im Maschinen- und Apparatebau, beispielsweise bei Textilmaschinen, Kraftfahrzeugen, Werkzeugmaschinen, etc., verwendet. Elektromagnetisch betätigbare Bremsen können reib- oder formschlüssig ausgeführt sein.

Hierbei weisen derartige Bremsen für den Fall von Reibungsbremsen üblicherweise auf der Primärseite und der Sekundärseite jeweils eine Reibfläche auf, wobei eine der Reibflächen an einer Ankerscheibe angeordnet ist, die durch Magnetkraft gegen die Kraft einer üblicherweise als Membran- oder Ringfeder ausgeführten Rückstellfeder gegen die andere Reibfläche gezogen wird. Bei formschlüssigen Bremsen, beispielsweise bei Zahnbremsen sind beidseitig Stimverzahnungen vorhanden. Nach dem Stand der Technik wird die erforderliche Magnetkraft beispielsweise von einem Elektromagneten erzeugt, wobei das Magnetfeld die Ankerscheibe mindestens einmal durchflutet.

In der Regel ist die Magnetspule und der sie umschließende Magnetkörper derartiger Bremsen primärseitig an einem feststehenden ersten Bauteil, beispielsweise einem Gehäuseteil, fest angeordnet. Der Magnetkörper weist eine erste Reibfläche oder Stimverzahnung auf. Zur Leitung des Magnetflusses ist sekundärseitig eine Ankerscheibe vorgesehen, welche mit einem axialen Spiel zum Magnetkörper rotierbar angeordnet ist, eine zweite Reibfläche oder Stimverzahnung aufweist und mit einem zweiten abzubremsenden Bauteil drehfest aber axial beweglich verbunden ist, beispielsweise über eine Ringfeder bzw. Membranfeder oder über ein Mitnahmeprofil und eine Rückholfeder.

Hierbei wird bei bestromter Spule ein Magnetfeld aufgebaut, wodurch eine auf die Ankerscheibe wirkende Zugkraft entsteht, so dass die beiden Reibflächen bzw. Stimverzahnungen zum Schließen der Bremse aufeinander gepresst werden. Die Membranfeder ist nach dem Stand der Technik mit einer Nabe verbunden, die beispielsweise über ein zweiteiliges Klemmelement, umfassend einen Außenkonus und einen Klemmring, mit dem abzubremsenden Bauteil drehfest verbunden ist.

Gemäß weiterer bekannter Ausgestaltungen ist es möglich, dass die Zugkraft durch zumindest einen Dauermagneten erzeugt wird. Beispielsweise ist aus der DE OS 2638944 der Anmelderin eine magnetisch betätigte Reibungskupplung oder Reibungsbremse bekannt, umfassend einen mit einer Elektromagnetspule und einem Dauermagneten versehenen Magnetkörper, bei der zwischen einem eine aus zwei getrennten, konzentrischen Ringen zusammengesetzte Ankerscheibe, eine Ringfeder und einen angetriebenen/anzutreibenden Mitnehmer aufweisenden Anker und dem feststehenden Magnetkörpers eine mit einer Leitscheibe, einem Einsatz, einer unmagnetischen Einlage und einer Nabe ausgestatteten Kupplungs-Bremsscheibe vorgesehen ist.

Bei den aus dem Stand der Technik bekannten elektromagnetisch betätigbaren Bremsen werden zur Übertragung des Momentes eine Ankerscheibe und eine Membranfeder benötigt. Des weiteren sind je nach Ausgestaltung der Membranfeder-Nabe-Verbindung weitere Bauteile erforderlich, wie beispielsweise das Klemmelement, welches der Befestigung der Nabe dient.

Der vorliegenden Erfindung liegt die Aufgabe zugrunde, eine elektromagnetisch betätigbare Bremse anzugeben, bei der zur Momentübertragung weniger Bauteile als bei den aus dem Stand der Technik bekannten Konstruktionen benötigt werden.

Diese Aufgabe wird erfindungsgemäß durch die Merkmale des Patentanspruchs 1 gelöst. Weitere Vorteile und vorteilhafte Ausgestaltungen gehen aus den Unteransprüchen hervor.

Demnach wird eine elektromagnetisch betätigbare Bremse vorgeschlagen, umfassend einen drehfest mit einem feststehenden ersten Bauteil wirkverbundenen Magnetkörper mit einer ersten Reibfläche oder Stirnverzahnung und eine mit einem zweiten abzubremsenden Bauteil drehfest verbundene Nabe, bei dem die Nabe eine der Reibfläche bzw. der Stirnverzahnung des Magnetkörpers zugewandte Reibfläche bzw. Stimverzahnung aufweist, wobei der Magnetkörpers axial beweglich ausgeführt ist. Der Magnetkörpers ist vorzugsweise gegen die Kraft eines Federelementes in Richtung auf die Nabe oder über ein mit dem ersten Bauteil drehfest verbundenes Mitnahmeprofil und eine Rückholfeder axial beweglich ausgeführt.

Hierbei dient die Nabe als magnetischer Rückschluss für den Magnetkörper, so dass bei Bestromung des Magnetkörpers eine axiale Zugkraft auf den Magnetkörpers wirkt, um die Bremse zu schließen. Im geschlossenen Zustand der Bremse wird durch die in Wirkverbindung stehenden Reibflächen eine kraftschlüssige Verbindung zwischen dem Magnetkörper und der Nabe erzielt.

Durch die erfindungsgemäße Konzeption wird in vorteilhafter Weise keine Ankerscheibe benötigt, was sich auf die Herstellungs- und Montagekosten positiv auswirkt.

Im Rahmen einer bevorzugten Ausführungsform der Erfindung wird vorgeschlagen, dass die Nabe mittels eines einen Außenkonus und einen Klemmring aufweisenden Klemmelementes mit dem zweiten abzubremsenden Bauteil, beispielsweise mit einer Welle drehfest verbunden ist.

Zudem kann vorgesehen sein, dass die Nabe mit dem Außenkonus des Klemmelementes einstückig ausgeführt ist, wodurch in vorteilhafter Weise ein Bauteil weniger benötigt wird.

Schließlich zeichnet sich eine weitere bevorzugte Ausgestaltung der Erfindung dadurch aus, dass die Bremse im unbestromten Zustand eines zum Öffnen der Bremse vorgesehenen Elektromagneten durch einen Dauermagneten geschlossen gehalten wird. Diese Ausführung kann bei Vorrichtungen vorteilhaft sein, bei denen die Bremse bei Stromausfall geschlossen sein muss.

Die Erfindung wird im Folgenden anhand der beigefügten Figuren beispielhaft näher erläutert. In diesen stellen dar:
- Figur 1:: Eine schematische Ansicht einer nach dem Stand der Technik ausgeführten elektromagnetisch betätigbaren Bremse;
- Figur 2:: Eine schematische Ansicht einer weiteren nach dem Stand der Technik ausgeführten elektromagnetisch betätigbaren Bremse;
- Figur 3:: Eine schematische Ansicht einer dritten nach dem Stand der Technik ausgeführten elektromagnetisch betätigbaren Bremse;
- Figur 4:: Eine schematische Ansicht einer elektromagnetisch betätigbaren Bremse gemäß einer bevorzugten Ausführungsform der Erfindung;
- Figur 5:: Eine schematische Ansicht einer elektromagnetisch betätigbaren Bremse gemäß einer weiteren bevorzugten Ausführungsform der Erfindung;
- Figur 6:: Eine schematische Ansicht einer elektromagnetisch betätigbaren Bremse gemäß einer dritten bevorzugten Ausführungsform der Erfindung;

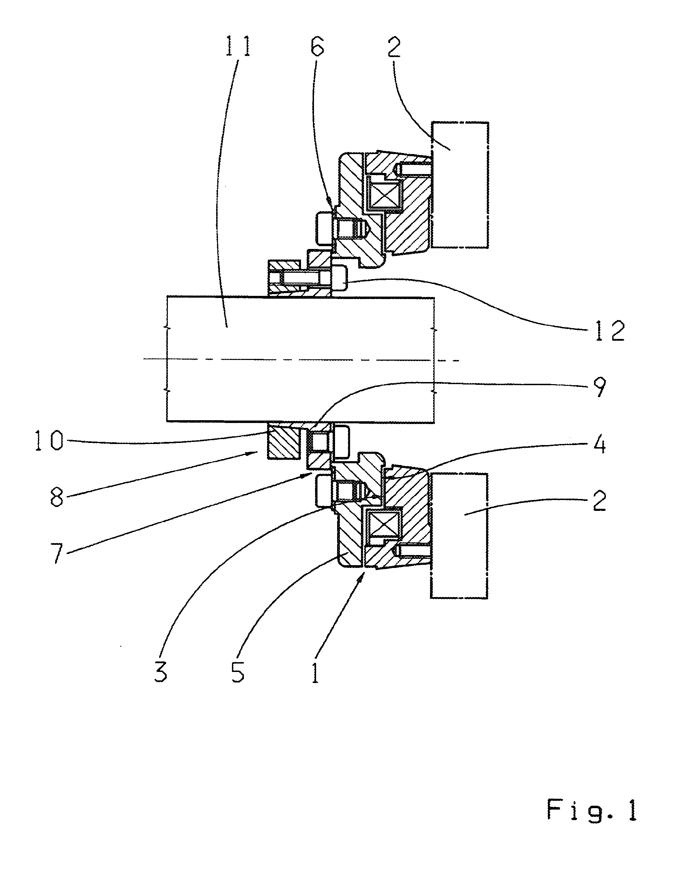

Bei der in Fig. 1 gezeigten elektromagnetisch betätigbaren Bremse ist der Magnetkörpers 1, umfassend eine Spule, an ein erstes feststehendes Bauteil 2, beispielsweise an einem Gehäuse befestigt und weist eine Reibfläche 3 auf. Des weiteren ist eine Reibfläche 4 aufweisende axial bewegliche Ankerscheibe 5 vorgesehen, welche über eine Membranfeder 6 mit einer Nabe 7 verbunden ist, welche mittels eines Klemmelementes 8 mit dem zweiten abzubremsenden Bauteil, beispielsweise mit einer Welle 11 drehfest verbunden ist. Wie aus Fig. 1 ersichtlich, weist das Klemmelement 8 einen Außenkonus 9 und einen Klemmring 10 auf, die mittels einer Schraube 12 miteinander kraftschlüssig verbindbar sind.

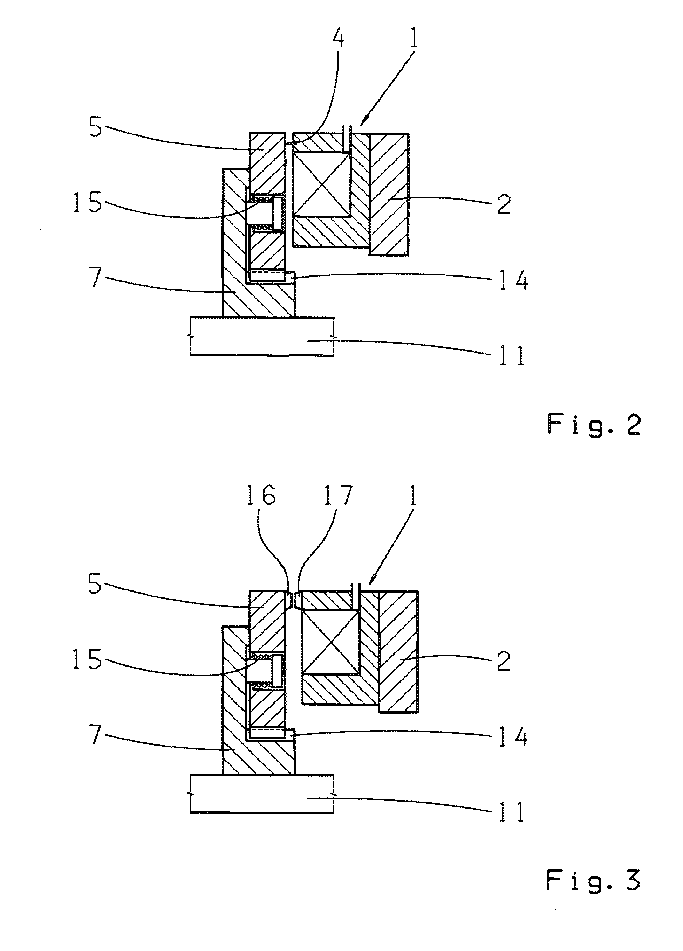

In Fig. 2 ist eine nach dem Stand der Technik ausgeführte Bremse im geöffneten Zustand dargestellt, bei dem die Ankerscheibe 5 über ein Mitnahmeprofil 14 drehfest mit der mit der abzubremsenden Welle 11 verbundenen Nabe 7 verbunden ist, wobei im nicht bestromten Zustand die Bremse durch die Kraft einer Rückholfeder 15 geöffnet wird und im geöffneten Zustand gehalten wird.

Das in Fig. 3 gezeigte Ausführungsbeispiel einer elektromagnetisch betätigbaren Bremse nach dem Stand der Technik unterscheidet sich vom Ausführungsbeispiel nach Fig. 2 darin, dass die Bremse als formschlüssige Bremse ausgeführt ist; zu diesem Zweck weisen die Ankerscheibe 5 und der Magnetkörper 1 jeweils eine Stimverzahnung 16 bzw. 17 auf.

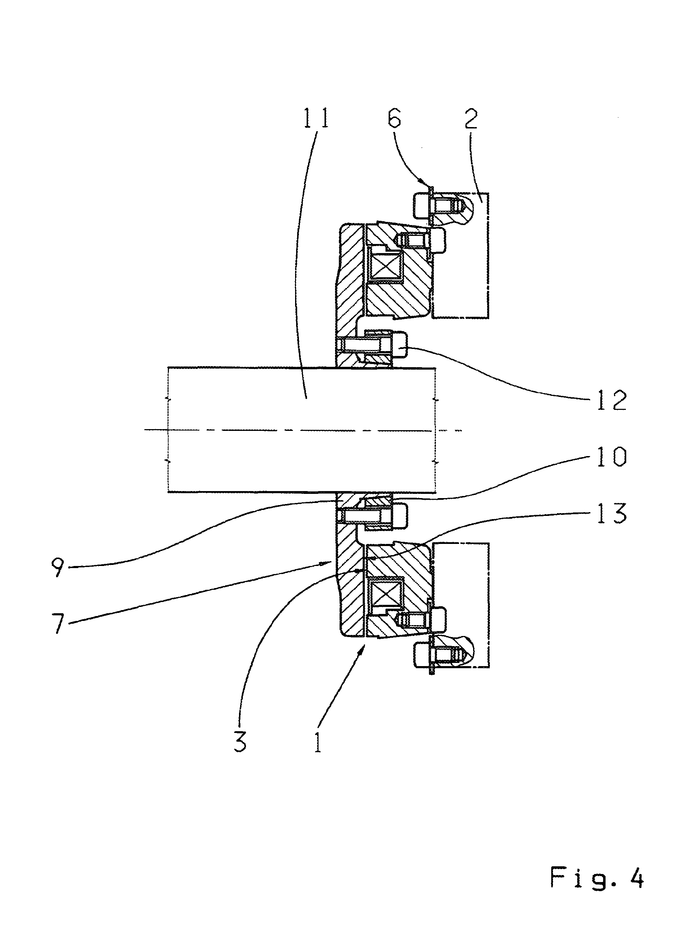

Gemäß einer bevorzugten Ausführungsform der Erfindung und bezugnehmend auf Fig. 4 umfasst eine elektromagnetisch betätigbare Bremse einen drehfest mit einem ersten feststehenden Bauteil 2 verbundenen Magnetkörper 1 mit einer Spule, der eine erste Reibfläche 3 aufweist und eine mit einem zweiten abzubremsenden Bauteil 11 (in der Regel ist das Bauteil 11 eine abzubremsende Welle) mittels eines einen Außenkonus 9 und einen Klemmring 10 aufweisenden Klemmelementes 8 drehfest verbundene Nabe 7.

Hierbei weist die Nabe 7 eine der Reibfläche 3 des Magnetkörpers zugewandte Reibfläche 13 auf, wobei der Magnetkörper 1 gegen die Kraft eines Federelementes, vorzugsweise einer Membranfeder 6 in Richtung auf die Nabe 7 axial beweglich ausgeführt ist. Hierbei wird beim Schließen der Bremse das Moment über die Membranfeder 6 auf das erste feststehende Bauteil 2 übertragen, welches beispielsweise ein Gehäuse ist.

Bei dem in Fig. 4 gezeigten Beispiel ist die Nabe 7 mit dem Außenkonus 9 des Klemmelementes 8 einstückig ausgeführt, so dass in vorteilhafter Weise ein Bauteil weniger benötigt wird.

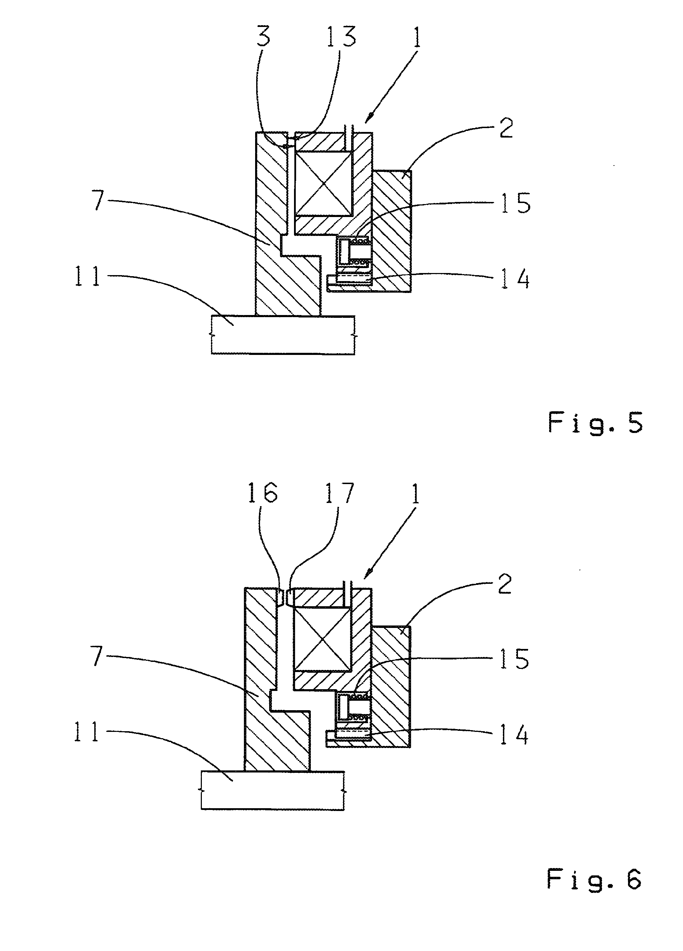

Bei dem in Fig. 5 gezeigten Ausführungsbeispiel weist die mit der abzubremsenden Welle 11 drehfest und axial fest verbundene Nabe 7 eine Reibfläche 13 auf; hierbei ist der Magnetkörper 1 über ein Mitnahmeprofil 14 mit dem ersten feststehenden Bauteil 2 drehfest verbunden und axial verschieblich angeordnet, wobei im nicht bestromten Zustand der Bremse eine Rückholfeder 15 das Öffnen der Bremse bewirkt.

Das in Fig. 6 dargestellte Ausführungsbeispiel einer elektromagnetisch betätigbaren Bremse gemäß der Erfindung unterscheidet sich vom Ausführungsbeispiel nach Fig. 5 dadurch, dass die Bremse als formschlüssige Bremse ausgeführt ist, wobei die Nabe 7 und der Magnetkörper 1 jeweils eine Stirnverzahnung 16 bzw. 17 aufweisen.

Selbstverständlich fällt jede konstruktive Ausbildung, insbesondere jede räumliche Anordnung der Bauteile der elektromagnetisch betätigbaren Bremse an sich sowie zueinander und soweit technisch sinnvoll, unter den Schutzumfang der vorliegenden Ansprüche, ohne die Funktion der Bremse, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Magnetkörper
- 2: erstes feststehendes Bauteil
- 3: Reibfläche
- 4: Reibfläche
- 5: Ankerscheibe
- 6: Membranfeder
- 7: Nabe
- 8: Klemmelement
- 9: Außenkonus
- 10: Klemmring
- 11: zweites abzubremsendes Bauteil
- 12: Schraube
- 13: Reibfläche
- 14: Mitnahmeprofil
- 15: Rückholfeder
- 16: Stimverzahnung
- 17: Stimverzahnung

## Patentansprüche

1. Elektromagnetisch betätigbare Bremse, umfassend einen drehfest mit einem ersten feststehenden Bauteil (2) verbundenen Magnetkörper (1), der eine erste Reibfläche (3) oder Stirnverzahnung (17) aufweist und eine mit einem zweiten abzubremsenden Bauteil (11) drehfest verbundene Nabe (7), die als magnetischer Rückschluss für den Magnetkörper dient, **dadurch gekennzeichnet, dass** die Nabe (7) eine der Reibfläche (3) oder der Stirnverzahnung (17) des Magnetkörpers (1) zugewandte Reibfläche (13) bzw. Stimverzahnung (16) aufweist und dass der Magnetkörper (1) in Richtung auf die Nabe (7) axial beweglich ausgeführt ist, und dass bei Bestromung des Magnetkörpers eine axiale Zugkraft auf den Magnetkörper wirkt, um die Bremse zu schließen.

2. Elektromagnetisch betätigbare Bremse nach Anspruch 1, **dadurch gekennzeichnet, dass** der Magnetkörper (1) gegen die Kraft eines Federelementes (6) auf die Nabe (7) axial beweglich ausgeführt ist.

3. Elektromagnetisch betätigbare Bremse nach Anspruch 1, **dadurch gekennzeichnet, dass** der Magnetkörper (1) über ein Mitnahmeprofil (14) mit dem ersten Bauteil (2) drehfest verbunden und axial verschieblich angeordnet ist, wobei im nicht bestromten Zustand der Bremse eine Rückholfeder (15) das Öffnen der Bremse bewirkt.

4. Elektromagnetisch betätigbare Bremse nach Anspruch 2, **dadurch gekennzeichnet, dass** das Federelement (6) als Membranfeder ausgeführt ist.

5. Elektromagnetisch betätigbare Bremse nach einem der vorangehenden Ansprüche, **dadurch gekennzeichnet, dass** die Nabe (7) mittels eines einen Außenkonus (9) und einen Klemmring (10) aufweisendes Klemmelementes (8) mit dem zweiten abzubremsenden Bauteil (11) drehfest verbunden ist.

6. Elektromagnetisch betätigbare Bremse nach Anspruch 5, **dadurch gekennzeichnet, dass** die Nabe (7) mit dem Außenkonus (9) des Klemmelementes (8) einstückig ausgeführt ist.

7. Elektromagnetisch betätigbare Bremse nach einem der vorangehenden Ansprüche, **dadurch gekennzeichnet, dass** die Bremse im unbestromten Zustand eines Elektromagneten durch einen Dauermagneten geschlossen gehalten wird.

## Claims

1. Electromagnetically actuable brake, comprising a magnet body (1) which is connected in a rotationally fixed manner to a first stationary component (2) and has a first friction face (3) or spur toothing system (17), and a hub (7) which is connected in a rotationally fixed manner to a second component (11) to be braked and serves as a back iron for the magnet body, **characterized in that** the hub (7) has a friction face (13) or spur toothing system (16) which faces the friction face (3) or the spur toothing system (17) of the magnet body (1), and **in that** the magnet body (1) is configured such that it can be moved axially in the direction of the hub (7), and **in that**, upon the application of current to the magnet body, an axial attraction force acts on the magnet body, in order to close the brake.

2. Electromagnetically actuable brake according to Claim 1, **characterized in that** the magnet body (1) is configured such that it can be moved axially counter to the force of a spring element (6) on the hub (7).

3. Electromagnetically actuable brake according to Claim 1, **characterized in that** the magnet body (1) is connected in a rotationally fixed manner via a catching profile (14) to the first component (2) and is arranged such that it can be displaced axially, a return spring (15) opening the brake in the currentless state.

4. Electromagnetically actuable brake according to Claim 2, **characterized in that** the spring element (6) is configured as a diaphragm spring.

5. Electromagnetically actuable brake according to one of the preceding claims, **characterized in that** the hub (7) is connected in a rotationally fixed manner to the second component (11) to be braked by means of a clamping element (8) which has an outer cone (9) and a clamping ring (10).

6. Electromagnetically actuable brake according to Claim 5, **characterized in that** the hub (7) is configured in one piece with the outer cone (9) of the clamping element (8).

7. Electromagnetically actuable brake according to one of the preceding claims, **characterized in that**, in the currentless state of an electromagnet, the brake is held closed by a permanent magnet.

## Revendications

1. Frein à actionnement électromagnétique, comportant un corps magnétique (1) relié de manière solidaire en rotation à un premier composant fixe (2), lequel corps magnétique comprend une première surface de frottement (3) ou une denture droite (17), et un moyeu (7) relié de manière solidaire en rotation à un deuxième composant (11) devant être freiné, lequel moyeu sert de blindage magnétique pour le corps magnétique, **caractérisé en ce que** le moyeu (7) comprend une surface de frottement (13) ou une denture droite (16) tournée vers la surface de frottement (3) ou la denture droite (17) du corps magnétique (1), et **en ce que** le corps magnétique (1) est réalisé de manière axialement mobile en direction du moyeu (7), et **en ce que**, lors de l'alimentation en courant électrique du corps magnétique, une force de traction axiale agit sur le corps magnétique pour fermer le frein.

2. Frein à actionnement électromagnétique selon la revendication 1, **caractérisé en ce que** le corps magnétique (1) est réalisé de manière axialement mobile sur le moyeu (7), à l'encontre de la force d'un élément de ressort (6).

3. Frein à actionnement électromagnétique selon la revendication 1, **caractérisé en ce que** le corps magnétique (1) est relié de manière solidaire en rotation au premier composant (2) par l'intermédiaire d'un profil d'entraînement (14) et est disposé de manière déplaçable axialement, un ressort de rappel (15) provoquant l'ouverture du frein à l'état non alimenté en courant électrique du frein.

4. Frein à actionnement électromagnétique selon la revendication 2, **caractérisé en ce que** l'élément de ressort (6) est réalisé sous forme de ressort à diaphragme.

5. Frein à actionnement électromagnétique selon l'une quelconque des revendications précédentes, **caractérisé en ce que** le moyeu (7) est relié de manière solidaire en rotation au deuxième composant (11) devant être freiné, au moyen d'un élément de serrage (8) comprenant un cône extérieur (9) et une bague de serrage (10).

6. Frein à actionnement électromagnétique selon la revendication 5, **caractérisé en ce que** le moyeu (7) est réalisé d'une seule pièce avec le cône extérieur (9) de l'élément de serrage (8).

7. Frein à actionnement électromagnétique selon l'une quelconque des revendications précédentes, **caractérisé en ce que** le frein est maintenu fermé par un aimant permanent dans l'état non alimenté en courant électrique d'un électroaimant.
